# EUROPÄISCHE PATENTSCHRIFT

(11) **EP 0 450 003 B1**
(45) Veröffentlichungstag und Bekanntmachung des Hinweises auf die Patenterteilung: **28.12.1994**
(21) Anmeldenummer: 90913191.4
(22) Anmeldetag: 30.08.1990
(51) Int. Cl.: B29C 45/24, B29C 45/74

(54) **ELEKTRISH AUFHEIZBARE DÜSE FÜR EINE SPRITZGIESSMACHINE, EINE HEISSKANALEINRICHTUNG O.DGL.**
ELECTRICALLY HEATED NOZZLE FOR INJECTION MOULDING MACHINES, HOT RUNNER MOULDS OR THE LIKE
AJUTAGE CHAUFFE ELECTRIQUEMENT POUR MACHINES DE MOULAGE PAR INJECTION, MOULES A CANAUX CHAUFFANTS OU ANALOGUE

(30) Priorität: 26.10.1989 DE 3935667
(43) Veröffentlichungstag der Anmeldung: 09.10.1991
(73) Patentinhaber: EWIKON Heisskanalsysteme GmbH & CO. Kommanditgesellschaft, D-32278 Kirchlengern (DE)
(72) Erfinder: MÜLLER, Walter, D-3552 Battenberg (DE)
(74) Vertreter: Stracke, Alexander, Dipl.-Ing.
(86) Internationale Anmeldenummer: DE9000663
(87) Internationale Veröffentlichungsnummer: WO9106413

(56) Entgegenhaltungen:
- EP-A- 0 172 925
- EP-A- 0 250 695
- DE-A- 2 208 643
- DE-A- 3 335 277
- FR-A- 2 552 706
- GB-A- 1 127 958
- GB-A- 2 097 316

## Beschreibung

Die Erfindung bezieht sich auf eine Düse für eine Spritzgießmaschine, eine Heißkanaleinrichtung o.dgl., mit einer Zuführöffnung, einem Innenraum und einer Austrittsöffnung, die von einer Materialschmelze, vorzugsweise einer Kunststoffschmelze, durchströmt werden, bei der ein in den Innenraum eingesetztes, den Innenraum in eine ringförmige Außenkammer und eine Innenkammer teilendes Ringsieb und eine in zwei Endstellungen - eine für den Spritzbetrieb und die andere für den Reinigungsbetrieb - bewegbare und arretierbare Umschaltvorrichtung vorgesehen ist, bei der in der einen Endstellung die Materialschmelze in die Innenkammer eingeführt wird und das Ringsieb von innen nach außen durchströmt.

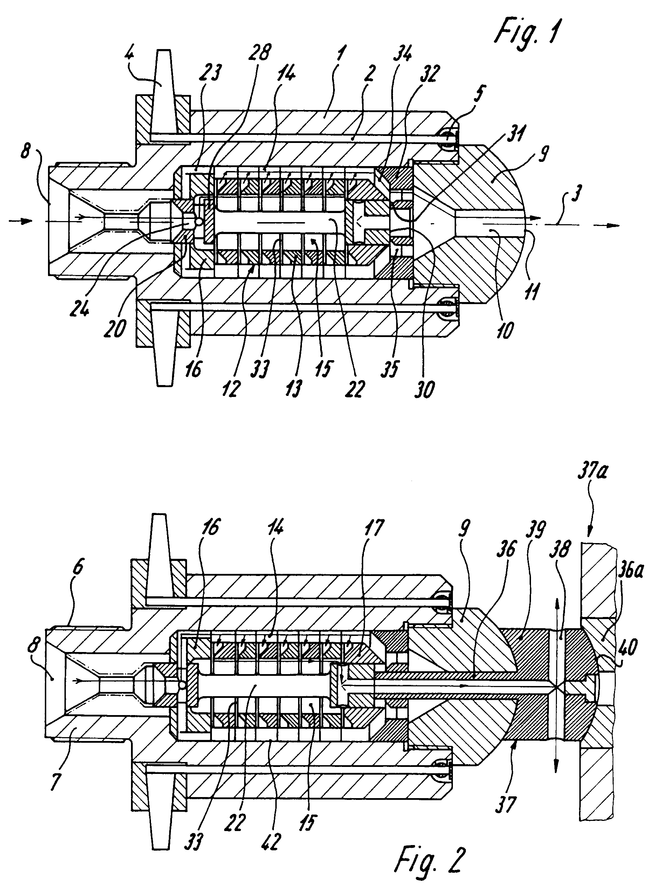

Es ist eine Düse der genannten Art bekannt (DE-A-22 08 643), bei der das Ringsieb von der durch einen Stutzen zugeführten Materialschmelze nur von innen nach außen durchflossen wird. Die vom Ringsieb zurückgehaltenen Partikel werden bei der in der Fig. 2 der genannten Literaturstelle aufgezeigten Reinigungsstellung der Umschaltvorrichtung von der zugeführten Materialschmelze ausgetragen.

Der Erfindung liegt die Aufgabe zugrunde, eine Düse der eingangs genannten Art so zu gestalten, daß die Umschaltung vom Spritzbetrieb auf Reinigungsbetrieb durch ein von außen in die Düse eingeführtes, zum Austragen der Verunreinigungen verwendbares Rohr vorgenommen werden kann.

Diese Aufgabe wird erfindungsgemäß dadurch gelöst, daß in der anderen Endstellung die Materialschmelze in die Außenkammer eingeführt wird und das Ringsieb von außen nach innen durchströmt, die Umschaltvorrichtung einen bolzenförmigen Steuerschieber aufweist, dessen Längsachse mit der Längsachse der Düse und der Längsachse der Austrittsöffnung zusammenfällt, der Steuerschieber durch ein von außen in die Austrittsöffnung eingeführtes Umlenkrohr in die Endstellung für den Reinigungsbetrieb bewegbar ist und die vom Ringsieb zurückgehaltenen Verunreinigungen durch das Umlenkrohr abziehbar sind, der Steuerschieber kolbenförmige Endstücke aufweist, die jeweils in einer mittigen Bohrung einer der in den Innenraum der Düse eingesetzten Führungsscheiben gleitbar gelagert sind, diese kolbenförmigen Endstücke eine von der äußeren Stirnseite ausgehende mittige Sackbohrung aufweisen, von der im Endbereich radiale Bohrungen nach außen sich erstrecken, die mit zur Außenkammer führenden Kanälen oder mit der Innenkammer in Verbindung bringbar sind, und daß die am Zuführende angeordnete Führungssscheibe mit von der mittigen Bohrung ausgehenden, sichelförmig ausgebildeten, in die Außenkammer einmündenden Kanälen versehen ist.

Das der Zuführöffnung zugewandte, kolbenförmige Endstück des Steuerschiebers steht unter dem Druck der zugeführten Materialschmelze, durch den eine Kraft auf den Steuerschieber erzeugt wird, die bestrebt ist, den Steuerschieber in die Endstellung zu bewegen oder in der Endstellung zu halten, die dem Spritzbetrieb entspricht. Durch das durch die Austrittsöffnung eingeführte Umlenkrohr wird der Steuerschieber in die andere Endstellung bewegt, die dem Reinigungsbetrieb entspricht. Gegen den Druck der Materialschmelze wird der Steuerschieber durch das Umlenkrohr in dieser Endstellung gehalten. in der die Materialschmelze in der Weise durch die Düse geführt wird, daß sie die sich an einer Siebseite gesammelten Verunreinigungen durch das Umlenkrohr nach außen fördert. Nach dem Abtransport der Verunreinigungen wird das Umlenkrohr aus der Düse herausgezogen. Die Materialschmelze drückt anschließend den Steuerschieber in die andere Endstellung, so daß die Düse nun wieder im Spritzbetrieb arbeiten kann.

Vorteilhafte Ausgestaltungen der Erfindung ergeben sich aus den Unteransprüchen.

Eine erfindungsgemäße elektrisch aufheizbare Düse ist in den Zeichnungen dargestellt und wird im folgenden beschrieben.

Es zeigen:
- Fig. 1: die Düse im Längsschnitt, und zwar im Spritzbetrieb,
- Fig. 2: die Düse nach der Fig. 1 mit zugeordnetem Umlenkrohr und zugeordneter Form im Reinigungsbetrieb,

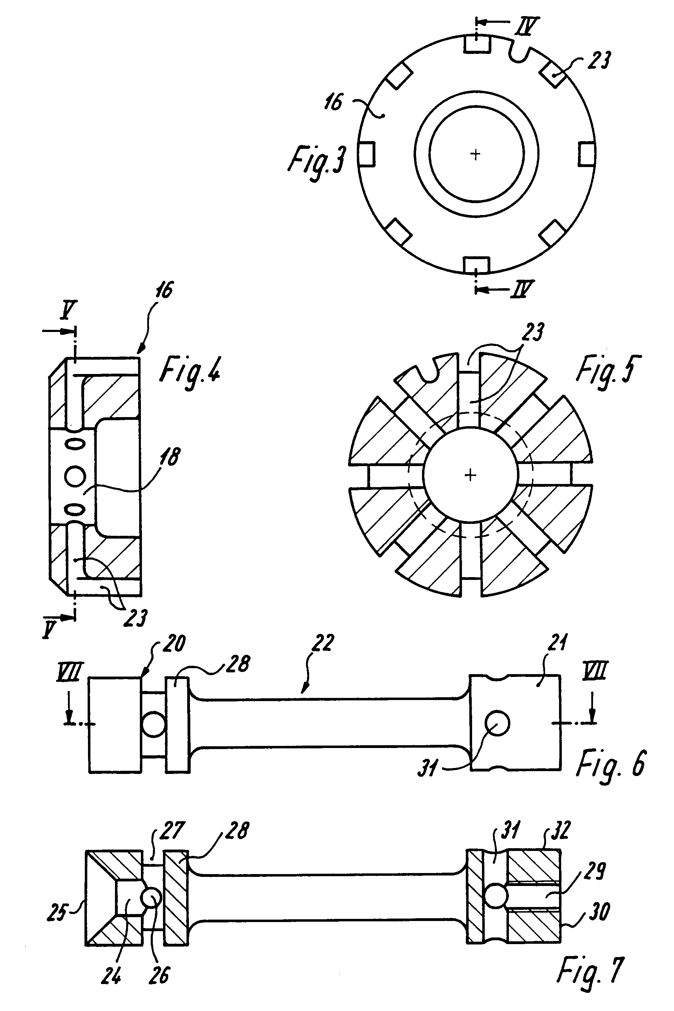

- Fig. 3: eine Führungsscheibe für den bolzenförmigen Steuerschieber im Aufriß,
- Fig. 4: einen Schnitt nach dem Schnitt IV-IV in Fig. 3,
- Fig. 5: einen Schnitt nach der Linie V-V in Fig. 4,
- Fig. 6: den bolzenförmigen Steuerschieber,
- Fig. 7: einen Schnitt nach der Linie VII-VII in Fig. 6,
- Fig. 8: eine weitere Führungsscheibe,
- Fig. 9: einen Schnitt nach der Linie IX-IX in Fig. 8 und
- Fig. 10: eine Ansicht in Richtung des Pfeiles X in Fig. 9,
- Fig. 11: eine Siebscheibe im Aufriß,
- Fig. 12: einen Schnitt nach der Linie XII-XII in Fig. 11,
- Fig. 13: eine benachbart dem Düsenkopf angeordnete Endscheibe im Vertikalschnitt,
- Fig. 14: eine Ansicht in Richtung des Pfeiles XIV in Fig. 13 und
- Fig. 15: eine Ansicht in Richtung des Pfeiles XV.

Die Düse nach den Fig. 1 und 2 weist einen zylindrischen Gehäusekörper 1 auf, der aus einem Material mit einem geringen effektiven elektrischen Widerstand gefertigt ist. In dem Gehäusekörper sind auf dem Umfang verteilt elektrisch aufheizbare Drähte 2 mit einem hohen effektiven elektrischen Widerstand angeordnet, die von einer Isolationsschicht umgeben sind und sich parallel zur Längsachse 3 der Düse erstrecken. Die Heizdrähte liegen mit einem Ende an einer Stromzuführung 4, während das andere Ende 5 mit dem Gehäusekörper verbunden ist.

Der Gehäusekörper weist ein mit einem Außengewinde 6 versehenes Anschlußstück 7 auf, mit dem der Gehäusekörper am vorderen Ende einer Spritzgießmaschine festgelegt werden kann. Die Düse kann jedoch auch in einer Heißkanaleinrichtung oder in ähnlichen Vorrichtungen verwendet werden. Das mit dem Außengewinde 6 versehene Anschlußstück 7 weist eine Zuführöffnung 8 für die Materialschmelze auf. Am vorderen Ende ist die Düse mit einem Düsenkopf 9 ausgerüstet, der in eine Gewindeöffnung des Gehäusekörpers 1 eingeschraubt wird. Der Düsenkopf ist mit einem Düsenkanal 10 und einer Austrittsöffnung 11 für die Materialschmelze ausgerüstet.

Der Innenraum der Düse wird durch ein Ringsieb 12, das sich aus einer Anzahl Siebscheiben 13 zusammensetzt, die aneinandergereiht sind und zueinander ausgerichtet werden können, in eine ringförmige Außenkammer 14 und in eine Innenkammer 15 geteilt.

Die das Ringsieb 12 bildenden Siebscheiben 13 sind zwischen einer hinteren Führungsscheibe 16 und einer vorderen Führungsscheibe 17 angeordnet. Diese Führungsscheiben weisen mittige Bohrungen 18 und 19 auf, in denen kolbenförmige Endstücke 20,21 eines bolzenförmigen Steuerschiebers 22 gleitbar gelagert sind.

Die benachbart dem Zuführende der Düse angeordnete Führungsscheibe 16 weist winkelförmige Kanäle 23 auf, die von der mittigen Bohrung 18 ausgehen, zunächst radial und dann axial verlaufen und in die Außenkammer 14 einmünden.

Das Endstück 20 des Steuerschiebers 22 ist mit einer mittigen Sackbohrung 24 ausgerüstet, die von der äußeren Stirnfläche 25 ausgeht. Von dieser Sackbohrung gehen im Endbereich radiale Bohrungen 26 nach außen, die in eine Ringnut 27 einmünden. Diese Ringnut 27 wird an einer Seite durch eine Scheibe 28 des Endstücks 20 begrenzt.

Das Endstück 21 ist mit einer mittigen Sackbohrung 29 ausgestattet, die von der Stirnfläche 30 ausgeht und aus deren Endbereich sich radiale Bohrungen 31 bis zur Außenfläche 32 des Endstücks 21 erstrecken.

Aus der Fig. 1, die den Spritzbetrieb zeigt, ergibt sich, daß der Steuerschieber 22 unter dem Druck der Materialschmelze, die auf das Endstück 20 wirkt, mit seiner Stirnfläche 30 an eine Anschlagfläche 31 einer Endscheibe 32 anliegt, die sich ihrerseits an der Innenfläche des Düsenkopfes 9 abstützt.

Die durch die Zuführöffnung 8 der Düse zugeordnete Materialschmelze fließt durch die axiale Bohrung 24 des Endstücks 20 sowie durch die radialen Bohrungen 26 und durch die Ringnut 27 in die Innenkammer 15 der Düse. Da diese Innenkammer an ihrem Außenumfang durch das Ringsieb 12 begrenzt wird, durchströmt die Materialschmelze anschließend die von den Siebscheiben 13 begrenzten Ringspalte 33. Diese Ringspalte weisen eine Breite von ca. 0,25 mm auf, so daß größere Feststoffpartikel in der Innenkammer zurückgehalten werden. Die Materialschmelze fließt von der Außenkammer 14 über Kanäle 34 und Bohrungen 35 in den Düsenkanal 10 des Düsenkopfes 9. Da während des Spritzbetriebes sich der Düsenkopf 9 an einer Angußbuchse 36a eines mit Formnestern ausgerüsteten Werkzeuges 37a abstützt, gelangt die Materialschmelze aus dem Düsenkanal in das zugeordnete Formnest.

Zum Umschalten des Steuerschiebers 22 von der in der Fig. 1 aufgezeigten Endstellung in die Endstellung nach der Fig. 2, die dem Reinigungsbetrieb entspricht, wird von außen in die Austrittsöffnung 11 bzw. in den Düsenkanal 10 ein Rohrstrang 36 eines Umlenkrohres 37 eingeführt, das T- oder L-förmig ausgebildet sein kann. Der Rohrstrang 36 greift flüssigkeitsdicht in den Düsenkanal 10 ein. Der ins Freie führende Rohrstrang 38 ist in dem Ausführungsbeispiel in einem Block 39 angeordnet, der sich in dem dargestellten Ausführungsbeispiel am Düsenkopf 9 und an der Angußbuchse 36a des Werkzeuges 37a abstützt.

Der Block 39 ist an der einen Seite der Kontur des Düsenkopfes 9 und an der anderen Seite der Außenfläche 40 der Angußbuchse angepaßt.

Bei einer Verwendung der Düse als Maschinendüse kann die Düse zur Umschaltung auf den Reinigungsbetrieb durch einen Maschinenhub von dem Werkzeug 37a weggezogen werden. Dann wird das Umlenkrohr 37 mit dem Block 39 an die Angußbuchse 36a angesetzt. Der andere Rohrstrang 36 wird in eine fluchtende Lage mit der Austrittsöffnung 11 bzw. mit dem Düsenkanal 10 gebracht und es wird dann die Düse an den Block 39 herangefahren, bis die in der Fig. 2 aufgezeigte Umschaltstellung erreicht ist. Beim Reinigungsbetrieb wird somit unter dem Druck der Materialschmelze die Stirnfläche 30 des Endstücks 21 des Steuerschiebers 22 an die freie Stirnfläche des Rohrstrangs 36 angedrückt.

Die der Düse zugeführte Materialschmelze wird nun zunächst in die Außenkammer 14 geleistet, durchströmt die Ringspalte 33 des Ringsiebes und gelangt in die Innenkammer 15, in der sich die Verunreinigungen wahrend des Spritzbetriebes angesammelt haben. Diese werden unter dem Druck der Materialschmelze durch die Bohrungen des Endstücks 21, durch den Rohrstrang 36 und durch den Rohrstrang 38 ins Freie gefördert.

Die das Ringsieb 12 bildenden Siebscheiben 13 weisen einen Kranz von im Vertikalschnitt kreissegmentförmigen Rippen 41, die sich bis zur zylindrischen Begrenzungsfläche der Außenkammer 14 erstrecken. Diese Rippen 41 überragen an der Spaltseite die Stirnfläche 43 um die Spaltbreite, so daß die ringförmigen Siebspalte durch Aneinanderreihen der Siebscheiben gebildet werden. Der durch den Gehäusekörper 1 und durch den Düsenkopf 9 begrenzte Innenraum wird somit mit den Führungsscheiben 16, 17 den zwischen den Führungsscheiben angeordneten Siebscheiben 13 und der sich an der Innenfläche des Düsenkopfes 9 abstützenden Endscheibe 32 gefüllt.

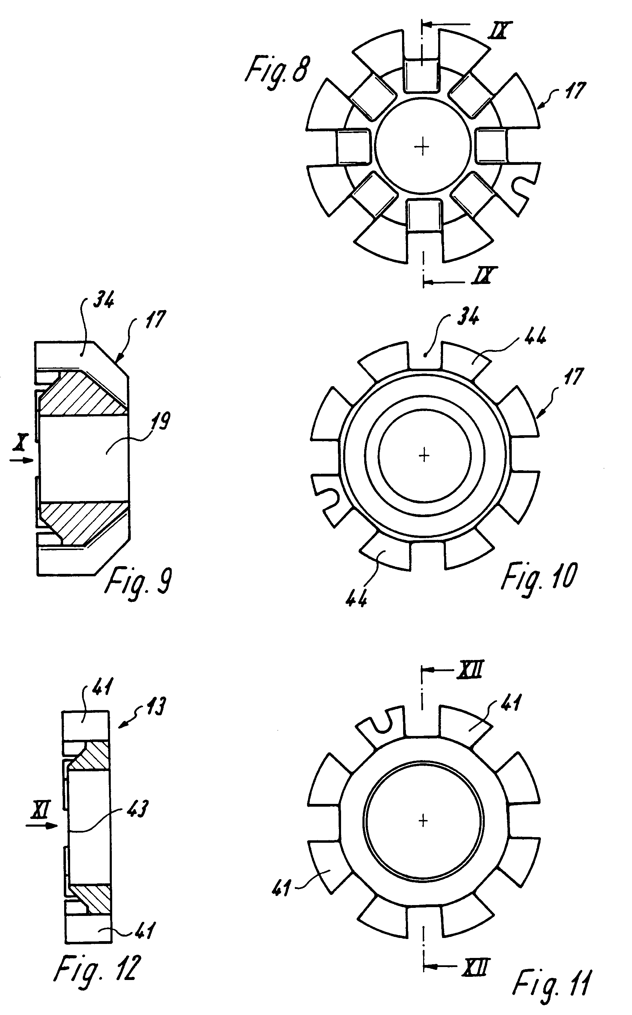

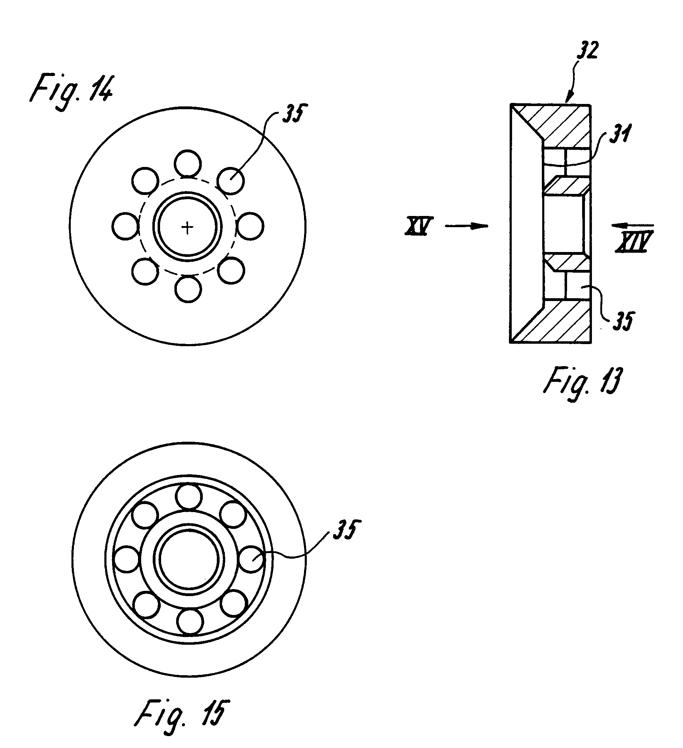

Aus den Fig. 8 bis 10 ergibt sich, daß auch die Führungsscheibe 17 einen Kranz von im Vertikalschnitt kreissegmentförmigen Rippen 44 aufweist, die sich bis zur zylindischen Begrenzungsfläche der Außenkammer erstrecken und zwischen denen Abströmkanäle 34 verlaufen.

## Patentansprüche

1. Düse für eine Spritzgießmaschine, eine Heißkanaleinrichtung oder dergleichen, mit einer Zuführöffnung (8), einem Innenraum und einer Austrittsöffnung (11), die von einer Materialschmelze, vorzugsweise einer Kunststoffschmelze, durchströmt werden, bei der ein in den Innenraum eingesetztes` den Innenraum in eine ringförmige Außenkammer (14) und eine Innenkammer (15) teilendes Ringsieb (12) und eine in zwei Endstellungen - eine für den Spritzbetrieb und die andere für den Reinigungsbetrieb - bewegbare und arretierbare Umschaltvorrichtung vorgesehen ist, bei der in der einen Endstellung die Materialschmelze in die Innenkammer (15) eingeführt wird und das Ringsieb (12) von innen nach außen durchströmt, **dadurch gekennzeichnet,** daß in der anderen Endstellung die Materialschmelze in die Außenkammer (4) eingeführt wird und das Ringsieb (12) von außen nach innen durchströmt, die Umschaltvorrichtung einen bolzenförmigen Steuerschieber (22) aufweist, dessen Längsachse mit der Längsachse (3) der Düse und der Längsachse der Austrittsöffnung (11) zusammenfällt, der Steuerschieber (22) durch ein von außen in die Austrittsöffnung eingeführtes Umlenkrohr (37) in die Endstellung für den Reinigungsbetrieb bewegbar ist und die vom Ringsieb (12) zurückgehaltenen Verunreinigungen durch das Umlenkrohr abziehbar sind, der Steuerschieber (22) kolbenförmige Endstücke (20,21) aufweist, die jeweils in einer mittigen Bohrung (18,19) einer der in den Innenraum der Düse eingesetzten Führungsscheiben (16,17) gleitbar gelagert sind, diese kolbenförmigen Endstücke (20,21) eine von der äußeren Stirnseite ausgehende mittige Sackbohrung (24,29) aufweisen, von der im Endbereich radiale Bohrungen nach außen sich erstrecken, die mit zur Außenkammer (14) führenden Kanälen oder mit der Innenkammer (15) in Verbindung bringbar sind, und daß die am Zuführende angeordnete Führungsscheibe (16) mit von der mittigen Bohrung (18) ausgehenden, winkelförmig ausgebildeten, in die Außenkammer (14) einmündenden Kanälen versehen ist.

2. Düse nach Anspruch 1, dadurch gekennzeichnet, daß ein Rohrstrang (36) des Umlenkrohres (37) flüssigkeitsdicht in die Austrittsöffnung (11) und in den Düsenkanal (10) eingreift.

3. Düse nach Anspruch 1 oder 2, dadurch gekennzeichnet, daß das Umlenkrohr (37) L- oder T-förmig ausgebildet ist, ein Rohrstrang (38) ins Freie führt und dieser Rohrstrang in einem Block (39) verläuft, der sich am Düsenkopf (9) und an einer Angußbuchse (36a) des mit mindestens einem Formnest versehenen Werkzeuges (37a) abstützt.

4. Düse nach Anspruch 3, dadurch gekennzeichnet, daß der Block (39) an der einen Seite der Kontur des Düsenkopfes (9) und an der anderen Seite der Außenfläche (40) der Angußbuchse (36a) angepaßt ist.

5. Düse nach Anspruch 4, dadurch gekennzeichnet, daß bei einer Verwendung als Maschinendüse die Düse zur Umschaltung auf den Reinigungsbetrieb durch einen Maschinenhub von dem Werkzeug (37a) weggezogen, dann der Rohrstrang (36) des Umlenkrohres (37) in den Düsenkanal (10) eingeführt und anschließend der Block (39) des Umlenkrohres an die Außenfläche (40) der Angußbuchse (36) angedrückt wird.

6. Düse nach Anspruch 1, dadurch gekennzeichnet, daß die dem Austrittsende zugewandte Führungsscheibe (17) auf der einen Seite einen ringförmigen Siebspalt (33) und auf der dem Austrittsende benachbart liegenden Seite zusammen mit einer Endscheibe (32) Abströmkanäle (34) von der Außenkammer (14) bildet, die in den Düsenkanal (10) des Düsenkopfes (9) einmünden.

7. Düse nach Anspruch 6, dadurch gekennzeichnet, daß die Führungsscheibe (17) einen Kranz von im Vertikalschnitt kreissegmentförmigen Rippen (44) aufweist, die sich bis zur zylindrischen Begrenzungsfläche der Außenkammer (14) erstrecken und zwischen denen Abströmkanäle verlaufen.

8. Düse nach Anspruch 1, dadurch gekennzeichnet, daß zwischen den Führungsscheiben (16,17) das Ringsieb (12) angeordnet ist, das sich aus einer Anzahl von Siebscheiben (13) zusammensetzt, die ringförmige Siebspalte (33) begrenzen.

9. Düse nach Anspruch 8, dadurch gekennzeichnet, daß die Breite eines ringförmigen Siebspaltes ca. 0,25 mm beträgt.

10. Düse nach Anspruch 8, dadurch gekennzeichnet, daß die Siebscheiben (13) einen Kranz von im Vertikalschnitt kreissegmentförmigen Rippen (41) aufweisen, der sich bis zur zylindrischen Begrenzungsfläche (42) der Außenkammer (14) erstreckt.

11. Düse nach einem der vorhergehenden Ansprüche, dadurch gekennzeichnet, daß sie einen zylindrischen Gehäusekörper (1) aufweist, mit dem an einem Ende der Düsenkopf (9) verschraubt ist, und daß der durch den Gehäusekörper (1) und den Düsenkopf begrenzte Innenraum mit den Führungsscheiben (16,17) den zwischen den Führungsscheiben angeordneten Siebscheiben (13) und der sich an der Innenfläche des Düsenkopfes (9) abstützenden Endscheibe (32) gefüllt ist.

12. Düse nach Anspruch 11, dadurch gekennzeichnet, daß die Rippen (41) der Siebscheiben (13) an der Spaltseite die Stirnfläche (43) der übrigen Scheibe um die Spaltbreite überragen.

13. Düse nach einem der vorhergehenden Ansprüche, dadurch gekennzeichnet, daß der Gehäusekörper (1) aus einem Material mit einem geringen effektiven elektrischen Widerstand gefertigt ist und in den Gehäusekörper elektrisch aufheizbare Drähte (2) mit einem hohen effektiven elektrischen Widerstand eingebettet, über die Länge gegenüber dem Gehäusekörper elektrisch isoliert sind und ein Ende eines jeden Drahtes an einer Stromzuführung anliegt und das andere Ende mit dem Gehäusekörper verbunden ist.

## Claims

1. A nozzle for an injection moulding machine, a hot-passage apparatus or the like, having a feed opening (8), an internal space and a discharge opening (11), through which flows a molten material, preferably a molten plastics material, in which there are provided an annular sieve (12) which is fitted into the internal space and which divides the internal space into an annular outer chamber (14) and an inner chamber (15) and a change-over switching device which is movable into and can be arrested in two end positions - one for the injection node and the other for the cleaning mode, in which in the one end position the molten material is introduced into the inner chamber (15) and flows through the annular sieve (12) fro the inside outwardly, characterised in that in the other end position the molten material is introduced into the outer chamber (4) and flows through the annular sieve (12) from the outside inwardly, the change-over switching device has a pin-like control slider (22) whose longitudinal axis coincides with the longitudinal axis (3) of the nozzle and the longitudinal axis of the discharge opening (11), the control slider (22) is movable into the end position for the cleaning mode by a deflection tube (37) which is inserted into the discharge opening from the outside and the impurities retained by the annular sieve (12) can be withdrawn through the deflection tube, the control slider (22) has piston-like end portions (20, 21) which are each mounted slidably in a central bore (18, 19) in a respective one of the guide discs (16, 17) which are inserted into the internal space of the nozzle, said piston-like end portions (20, 21) have a central blind bore (24, 29) which extends from the outer end and from which in the end region radial bores extend outwardly, which radial bores can be communicated with passages leading to the outer chamber (14) or with the inner chamber (15) and that the guide disc (16) arranged at the feed end is provided with passages which extend from the central bore (18) and which are of an angled configuration and which open into the outer chamber (14).

2. A nozzle according to claim 1 characterised in that a portion (36) of the deflection tube (37) engages fluid-tightly into the discharge opening (11) and into the nozzle passage (10).

3. A nozzle according to claim 1 or claim 2 characterised in that the deflection tube (37) is of an L- or T-shaped configuration, a tube portion (38) leads into the open and said tube portion extends in a block (39) which is supported against the nozzle head (9) and against a sprue bushing (36a) of the tool (37a) which is provided with at least one mould cavity.

4. A nozzle according to claim 3 characterised in that the block (39) is adapted at one side to the contour of the nozzle head (9) and at the other side to the outside surface (40) of the sprue bushing (36a).

5. A nozzle according to claim 4 characterised in that when used as a machine nozzle the nozzle, for switching over to the cleaning mode, is pulled away from the tool (37a) by a machine stroke movement, then the portion (36) of the deflection tube (37) is introduced into the nozzle passage (10) and then the block (39) of the deflection tube is pressed against the outside surface (40) of the sprue bushing (36a).

6. A nozzle according to claim 1 characterised in that the guide disc (17) which is towards the discharge end forms an annular sieve gap (33), on the one side, while on the side adjacent the discharge end, together with an end disc (32), it forms discharge flow passages (34) from the outer chamber (14), which discharge flow passages open into the nozzle passage (10) of the nozzle head (9).

7. A nozzle according to claim 6 characterised in that the guide disc (17) has a ring of ribs (44) which are in the shape of a segment of a circle in vertical section, the ribs extending to the cylindrical boundary surface of the outer chamber (14) and discharge flow passages extending between the ribs.

8. A nozzle according to claim 1 characterised in that the annular sieve (12) is arranged between the guide discs (16, 17), the annular sieve being made up of a number of sieve discs (13) which define annular sieve gaps (33).

9. A nozzle according to claim 8 characterised in that the width of an annular sieve gap is about 0.25 mm.

10. A nozzle according to claim 8 characterised in that the sieve discs (13) have a ring of ribs (41) which are in the form of a segment of a circle in vertical section, the ring extending to the cylindrical boundary surface (42) of the outer chamber (14).

11. A nozzle according to one of the preceding claims characterised in that it has a cylindrical housing body (1) to which the nozzle head (9) is screwed at one end, and that the internal space defined by the housing body (1) and the nozzle head is filled with the guide discs (16, 17), the sieve discs (13) disposed between the guide discs, and the end disc (32) which is supported at the inside surface of the nozzle head (9).

12. A nozzle according to claim 11 characterised in that the ribs (41) of the sieve discs (13) project at the gap side beyond the end face (43) of the other disc, by the gap width.

13. A nozzle according to one of the preceding claims characterised in that the housing body (1) is made from a material with a low effective electrical resistance and electrically heatable wires (2) with a high effective electrical resistance are embedded in the housing body and are electrically insulated over the length relative to the housing body and one end of each wire is connected to a current supply and the other end is connected to the housing body.

## Revendications

1. Buse pour une presse à injection, un dispositif à canaux chauffants ou similaires, comportant une ouverture d'arrivée (8), un espace intérieur et une ouverture de sortie (11), lesquels sont traversés par une matière fondue, de préférence une matière synthétique fondue, dans laquelle sont prévus un filtre annulaire (12) placé dans l'espace intérieur et partageant l'espace intérieur en une chambre extérieure annulaire (14) et une chambre intérieure (15), et un dispositif de commutation à deux positions extrêmes - une pour le mode d'injection et l'autre pour le mode de nettoyage - mobile et à possibilité de blocage, dans laquelle, dans l'une des positions extrêmes, la matière fondue est introduite dans la chambre intérieure (15) et coule à travers le filtre annulaire (12) de l'intérieur vers l'extérieur, caractérisée en ce que, dans l'autre position extrême, la matière fondue est introduite dans la chambre extérieure (14) et coule à travers le filtre annulaire (12) de l'extérieur vers l'intérieur, le dispositif de commutation présente un poussoir de commande (22) en forme de goujon dont l'axe longitudinal coïncide avec l'axe longitudinal (3) de la buse et avec l'axe longitudinal de l'ouverture de sortie (11), le poussoir de commande (22) est déplaçable dans la position extrême correspondant au mode de nettoyage par un tube déflecteur (37) introduit par l'extérieur dans l'ouverture de sortie et les impuretés retenues par le filtre (12) peuvent être retirées par le tube déflecteur, le poussoir de commande (22) présente des extrémités en forme de pistons (20,21) portées d'une façon autorisant leur glissement dans un alésage central (18,19) de l'une des bagues de guidage (16,17) placées dans l'espace intérieur de la buse, ces extrémités en forme de pistons (20,21) présentent un trou borgne central (24,29) partant de la face frontale extérieure, à partir duquel, à proximité du fond, partent des perçages radiaux dirigés vers l'extérieur et pouvant être mis en liaison avec des canaux conduisant à la chambre extérieure (14) ou avec la chambre intérieure (15), et en ce que la bague de guidage (16) placée du côté de l'arrivée est munie de canaux partant de l'alésage central (18), en forme d'équerres, et conduisant dans la chambre extérieure (14).

2. Buse selon la revendication 1, caractérisée en ce qu'une ligne de tubes (36) du tube déflecteur (37) s'engage de manière étanche aux liquides dans l'ouverture de sortie (11) et le conduit de buse (10).

3. Buse selon la revendication 1 ou 2, caractérisée en ce que le tube déflecteur (37) est construit en forme de T ou de L, un tube (38) conduit à l'air libre et cette ligne de tubes est située à l'intérieur d'un bloc (39) s'appuyant sur la tête de buse (9) et sur une cheminée de moule (36a) de l'outil (37a) muni d'au moins une empreinte de moule.

4. Buse selon la revendication 3, caractérisée en ce que le bloc (39) est adapté d'un côté au contour de la tête de buse (9) et de l'autre côté à une surface extérieure (40) de la cheminée de moule (36a).

5. Buse selon la revendication 4, caractérisée en ce que, lorsqu'on l'utilise comme buse dans une machine, la buse est retirée de l'outil (37a) par levage de la machine, la ligne de tubes (36) du tube déflecteur (37) est ensuite introduit dans le conduit de buse (10), puis le bloc (39) du tube déflecteur est placé contre la surface extérieure (40) de la cheminée de moule (36).

6. Buse selon la revendication 1, caractérisée en ce que la bague de guidage (17) tournée vers le côté sortie forme d'un côté une fente de filtrage annulaire (33) et, de l'autre côté proche de l'extrémité de sortie, forme avec une bague d'extrémité (32) des canaux d'écoulement (34) de la chambre extérieure (14), qui débouchent dans le conduit de buse (10) de la tête de buse (9).

7. Buse selon la revendication 6, caractérisée en ce que la bague de guidage (17) présente une couronne de nervures (44) se présentant en coupe verticale sous la forme d'arcs de cercles qui s'étendent jusqu'à la surface cylindrique délimitant la chambre extérieure (14) et entre lesquelles s'étendent des conduits d'écoulement.

8. Buse selon la revendication 1, caractérisée en ce que le filtre annulaire (12) est placé entre les bagues de guidage (16,17) et est composé de plusieurs disques de filtrage (13) qui délimitent des fentes de filtrage annulaires (33).

9. Buse selon la revendication 8, caractérisée en ce que la largeur d'une fente de filtrage annulaire est d'environ 0,25 mm.

10. Buse selon la revendication 8, caractérisée en ce que les disques de filtre (13) présentent une couronne de nervures (44) se présentant en coupe verticale sous la forme d'arcs de cercles qui s'étendent jusqu'à la surface cylindrique délimitant la chambre extérieure (14).

11. Buse selon l'une quelconque des revendications précédentes, caractérisée en ce qu'elle présente un corps de boîtier cylindrique (1) sur lequel est vissé à une extrémité la tête de buse (9), et en ce que l'espace intérieur délimité par le corps de boîtier (1) et la tête de buse est rempli avec les bagues de guidage (16,17), les disques de filtre (13) placés entre les bagues de guidage, et la bague d'extrémité (32) s'appuyant sur la surface intérieure de la tête de buse (9).

12. Buse selon la revendication 11, caractérisée en ce que les nervures (41) des disques de filtre (13) dépassent la surface frontale (43) de l'autre disque, du côté des fentes, d'une distance égale à la largeur des fentes.

13. Buse selon l'une des revendications précédentes, caractérisée en ce que le corps de boîtier (1) est fabriqué dans un matériau présentant une faible résistance électrique effective et des fils (2) pouvant être chauffés électriquement et d'une haute résistance électrique effective sont incorporés dans le corps de boîtier, sont isolés électriquement du corps de boîtier sur toute leur longueur et une extrémité de chaque fil se trouve au niveau d'arrivée d'électricité et l'autre extrémité est reliée au corps de boîtier.
